# EUROPÄISCHE PATENTANMELDUNG

(11) **EP 2 416 043 A2**
(43) Veröffentlichungstag der Anmeldung: **08.02.2012**
(21) Anmeldenummer: 11005782.5
(22) Anmeldetag: 14.07.2011
(51) Int. Cl.: F16L 3/12

(54) **Befestigungseinrichtung für eine Kupplungs- oder Bremsleitung**

(30) Priorität: 05.08.2010 DE 102010033504
(71) Anmelder: Schaeffler Technologies GmbH & Co. KG, 91074 Herzogenaurach (DE)
(72) Erfinder: Lecointre, Jean-Michael, 45450 Donnery (FR); Tamaazousti, Ahmed, 45000 Orleans (FR)

(57) **Zusammenfassung**

Die Erfindung betrifft eine Befestigungseinrichtung (1) für eine Kuppl ungs- oder Bremsleitung (4) an einem Montageort, mit einem ersten Halter (2), der am Montageort anbringbar ist und m it einem separaten zweiten, zumindest abschnittsweise schlauchförmigen und aus bei Wärmezufuhr schrumpfendem Material aufgebauten zweiten Halter (3), in dem die Hydraulikleitung (4) im montierten Zustand aufgenommen ist, wobei der erste H alter im Material des zweiten Halters, diesen durchdringend, formschlüssig festgelegt ist. Die Erfindung betrifft auch eine Brems- und/oder Kupplungshydraulikleitung mit einer solchen Befestigungseinrichtung.

## Beschreibung

Die Erfindung betrifft eine Befestigungseinrichtung für eine Kupplungs- oder Bremsleitung an einem Montageort, mit einem ersten Halter, der am Montageort anbringbar ist und m it einem separaten zweiten, zumindest abschnittsweise schlauchförmigen und aus bei Wärmezufuhr schrumpfendem Material aufgebauten zweiten Halter, in dem die Hydraulikleitung im montierten Zustand aufgenommen ist.

Die Erfindung betrifft auch eine Brems- und/oder Kupplungshydraulikleitung mit einer solchen Befestigungseinrichtung.

Aus dem Stand der Technik, etwa der DE 3025601 C2 sind Befestigungseinrichtungen bekannt, die zur radialen Festlegung von Rohrleitungen verwendet werden. Solche Befestigungseinrichtungen werden insbesondere zum geräuscharmen Aufhängen von langgestreckten Bauteilen, wie Rohren oder Schläuchen verwendet. Ein Befestigungsteil, wie eine Schelle, umgreift mit einem runden Abschnitt ein Dämpfungsglied, bspw. aus Gummi, und ist mit einem abstehenden Abschnitt an einer Karosseriewand festgelegt. Im Fahrzeugbau ist es eine häufig auftretende Forderung Rohrleitungen, insbesondere Hydraulikleitungen, ortsfest anzubringen. Solche Rohrleitungen, insbesondere Hydraulikleitungen werden im Fahrzeugraum befestigt. Die DE 3025601 C2 zeigt dabei eine konventionelle Art auf, wie zumindest eine radiale Festlegung erreichbar ist. Allerdings löst der in diesem Dokument offenbarte Ansatz nicht, wie eine axiale Festlegung der Rohrleitung relativ zu einer Karosseriewand, und somit it auch relativ zu einem dabei genutzten Befestigungsteil, stattfinden kann.

Um sowohl eine radiale, als auch eine axiale Festlegung der Rohrleitung relativ zu einem Montageort, der bspw. an einer Wandung im Fahrzeugraum befindlich ist, zu erreichen, zeigt die DE 10 2010 014 670.6, welche am 12. April 2010 eingereicht wurde, dass auf eine Hydraulikleitung zwei voneinander getrennte Fixierschlauchabschnitte aufbringbar sind, voneinander beabstandet sind und unter Wärmeeinwirkung auf die Hydraulikleitung aufgeschrumpft werden. Im zwischen den beiden Fixierschlauchabschnitten befindlichen Freiraum greift dann eine Befestigungsschelle an. Die Befestigungsschelle stellt einerseits eine radiale Festlegung der Hydraulikleitung relativ zu einem Montageort fest, wobei die Fixierschlauchabschnitte, die auf beiden Seiten der Befestigungsschelle um die Hydraulikleitung herum angeordnet sind, ein axiales Verrutschen der Hydraulikleitung relativ zur Befestigungsschelle verhindern.

Diese Lösung hat jedoch den Nachteil, dass die Leitungen speziell vorbereitet werden müssen. Auch bedarf diese Vorbereitung einer erheblichen Präzision. Das macht es schwierig, wenn ein Fahrzeughersteller vorgefertigte Hydraulikleitungen und vorgefertigte Befestigungseinrichtungen verwenden will.

Auch sind Lösungen bekannt, die auf geschlitzte Stahlhülsen zurückgreifen. Solche Stahlhülsen haben jedoch den Nachteil eines hohen Gewichts und hoher Herstell kosten. Gerade bei Vibrationen hat sich auch bei dieser und anderen herkömmlichen Lösungen herausgestell t, dass sich die Hydraulikleitung aus den Befestigungseinrichtungen heraus rüttelt. Dies gilt es ebenfalls zu verhindern.

Es ist die Aufgabe der vorliegenden Erfindung, eine kostengünstige und einfach zu montierende Befestigungseinrichtung für ein Kupptungs- oder Bremssystem zur Verfügung zu stellen, die sowohl eine axiale Festlegung, als auch eine radiale Festlegungrelativzueinem Montageort gewährleistet.

Diese Aufgabe wird mit einer Befestigungseinrichtung für eine Kupplungs- oder Bremsleitung mit den Merkmalen des Anspruchs 1 gelöst. Danach ist der erste Halter im Material des zweiten Halters, diesen durchdringend, formschlüssig festgelegt ist.

Aufgrund der formschlüssigen Festlegung wird sowohl das radiale, als auch das axiale Verrutschen des zweiten Halters relativ zum ersten Halter verhindert. Wird der zweite Halter unter Wärmezufuhr auf die Kupplungs- oder Bremsleitung, bzw. Hydraulikleitung aufgeschrumpft, so ist dadurch auch nicht nur die radiale U nverschieblichkeit der Hydraulikleitung relativ zum zweiten Halter, sondern auch die axiale Unverschieblichkeit der Hydraulikleitung relativ zum zweiten Halter erreicht. Auf diese Weise ist die Hydraulikleitung sowohl radial als auch axial am Montageort fixiert. Die einzelnen unspezifisch vorbereiteten Elemente der Befestigungseinrichtung sowie eine Standard-Hydraulikleitung, können in jedem spezifischen Fahrzeugraum modellabhängig, kostengünstig und verlässlich eingesetzt werden.

Vorteilhafte Ausführungsformen sind in den Unteransprüchen beansprucht und w erden nachfolgend näher erläutert.

So ist es von Vorteil, wenn der erste Halter durch ei n Loch einer Wandung des zweiten Halters ragt. Auf diese Weise kann der erste Halter in direkter Anlage mit der Hydraulikleitung geraten. Das Loch verhindert ein axiales Verschieben des zweiten Halters relativ zum ersten Halter. Eine präzise Festlegung der Hydraulikleitung wird dadurch ermöglicht.

Um zu vermeiden, dass sich der erste Halter bei Vibrationen vom zweiten Halter löst, ist es von Vorteil, wenn der erste Halter die Wandung des zweiten Halters auf der Innenseite hi ntergreift.

Es ist ferner von Vorteil, wenn der erste Halter als Clip ausgebildet ist. Solche Clipse, insbesondere solche aus Kunststoff gefertigten Clipse, lassen sich auch bei einer Großserienfertigung einfach und kostengünstig herstellen. Die Montage von solchen Clipsen, wie auch deren Ersatz nach einer längeren Nutzung im Fahrzeugraum, ist besonders einfach und kostengünstig.

Die Montage lässt sich auch vereinfachen, wenn der erste Halter auf seiner dem Montageort zugewandten Seite nach Art eines Zapfens ausgebildet ist.

Um ein Lösen des Zapfens vom Montageort zu verhindern, ist es von Vorteil, wenn umlaufende Vorsprünge als Formschlusselemente vorhanden sind, die in Gegenformschlusselemente am Montageort eingreifen.

Die axiale Festlegung der Hydraulikleitung lässt sich verbessern, wenn sich der zweite Halter in seiner Axialerstreckung beidseitig des ersten Halters befindet. Die radiale Festlegung lässt sich ferner verbessern, wenn der zweite Halter ein einheitliches Bauteil ist.

Die Montage lässt sich auch weiter vereinfachen, wenn der zweite Halter im ungeschrumpften Zustand einen einheitlichen ersten Innendurchmesser aufweist. Von Vorteil ist es dabei, wenn der erste Innendurchmesser etwas größer als der Außendurchmesser der Hydraulikleitung ist, da ein Einschieben der Hydraulikleitung dann einfach möglich ist.

Die zur axialen Festlegung der Hydraulikleitung relativ zum Montageort benötigten Presskräfte, lassen sich dann erreichen, wenn der zweite Halter im abschnittsweise geschrumpften Zustand einen zweiten Innendurchmesser aufweist, der kleiner als der erste Innendurch messer ist.

Die Aufgabe wird ebenso gelöst mit einer eine erfindungsgemäße Befestigungseinrichtung aufweisenden Brems- und/oder Kupplungshydraulikleitung.

Die Erfindung wird nachfolgend auch anhand ei nes Ausführungsbeispiels und zugehöriger Zeichnungen näher erläutert.

So zeigen:
- Fig. 1: eine erste Ausführungsform eines ersten Halters in perspektivischer Darstellung,
- Fig. 2: den ersten Halter aus Fig. 1 und ei nen zweiten Halter, die bereits zusammengebaut sind, ohne dass eine in diesem festgelegte Hydraulikleitung vorhanden ist,
- Fig. 3: die Befestigungseinrichtung aus Fig. 2 mit einer in sie eingelegten Hydraulikleitung vor einer Wärmezufuhr zum Erreichen des Schrumpfens eines oder zweier Abschnitte des zweiten Halters und
- Fig. 4: die Befestigungseinrichtung aus Fig. 3 im auf die Hydraulikleitung aufgeschrumpften Zustand.

Die Zeichnungen sind lediglich schematischer Natur und dienen nur dem Verständnis der Erfindung. Für die gleichen Elemente wurden gleiche Bezugszeichen verwendet.

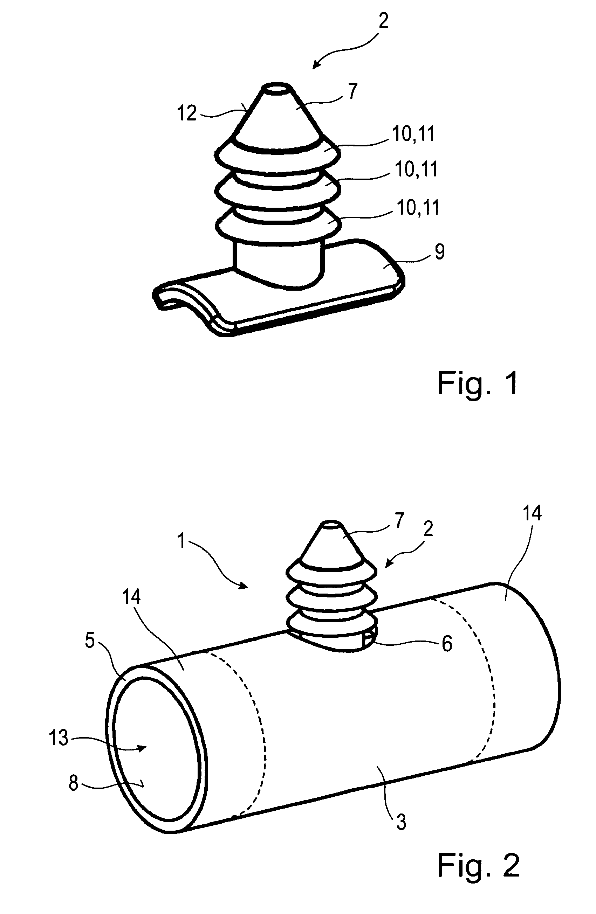

In Fig. 1 ist ein erstes Element einer Befestigungseinrichtung 1 gemäß der Erfindung dargestellt. Dieses erste Element ist ein erster Halter 2. Der erste Halter 2 ist an einem Montageort festlegbar. Dieser Montageort ist insbesondere in Kraftfahrzeugen, wie Pkws oder Lkws vorgehalten, und dort insbesondere in einem Fahrzeugraum, wie einem Motorraum.

Der erste Halter 2 wirkt mit einem zweiten Halter 3 zusammen, der in den Fig. 2, 3 und 4 dargestellt ist.

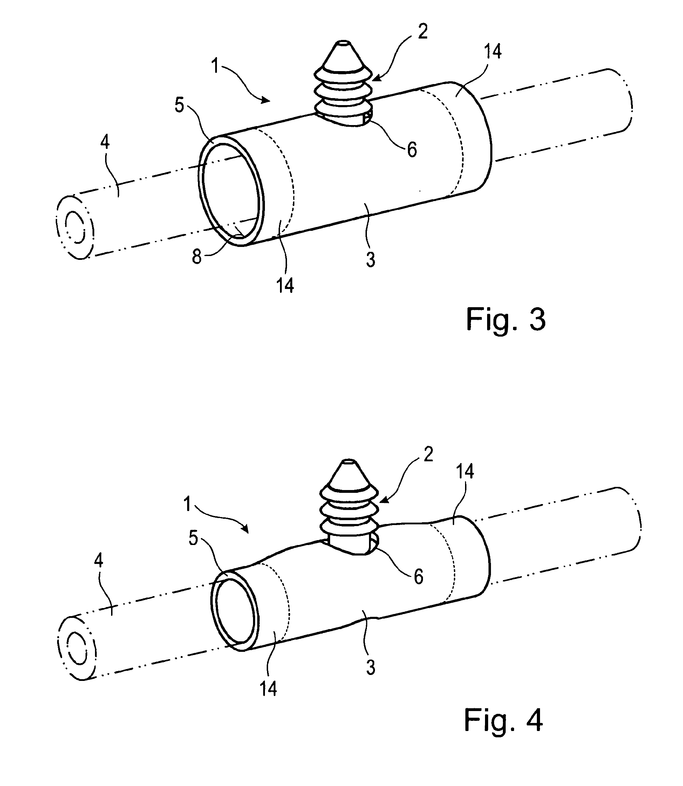

In den Fig. 3 und 4 ist auch eine Hydraulikleitung 4 dargestellt, die durch die Befestigungseinrichtung 1 an einem Montageort radial und axial festlegbar ist. Dabei ragt der erste Halter 2 durch eine Wandung 5 des zweiten Halters 3 hindurch. Wie aus den Fig. 2 und 4 zu entnehmen ist, ragt dabei der erste Halter 2 durch ein Loch 6 des z weiten Halters 3. Insbesondere ragt ein Zapfen 7 des ersten Halters 2 durch das Loch 6. Auf einer Innenseite 8 des zweiten Halters 3 ist dann ein H intergriffsbereich 9, wie er in Fig. 1 zu erkennen ist, vorhanden. Dieser Hintergriffsbereich 9 liegt an der Innenseite 8 des zweiten Halters 3 an und kann auch in Anlage mit der Hydraulikleitung 4 befindlich sein.

Der Zapfen 7 weist auf seiner Außenseite umlaufende Formschlusselemente 10 auf. Die Formschlusselemente 10 sind in Fig. 1 als drei hintereinander angeordnete um laufende Rippen oder Vorsprünge 11 ausgebildet. Der Zapfen 7 weist an seinem dem Montageort zugewandten distalen Ende eine kegelige Oberfläche 12 auf.

Wie aus Fig. 2 zu erkennen ist, ist der erste Halter 2 massiv ausgebildet, kann jedoch auch hohl ausgebildet sein. Der zweite Halter 3 ist schlauchförmig und weist ein im ungeschrumpften Zustand kreisförmigen Durchgang 13 auf. Der z weite Halter 3 weist zwei Endbereiche 14 auf.

Während der zweite Halter 3 durchgängig aus einem Material fertigbar ist, ist es möglich, dass nur in den Endbereichen 14 ein Material verwendet ist, das bei Wärmezufuhr schrumpft. Zur Befestigung der Hydraulikleitung 4 wird in dem Durchgang 13 des zweiten Halters 3 die Hydraulikleitung 4 eingesc hoben, wobei im zweiten Halter 3 bereits der erste Halter 2 montiert ist. Der in Fig. 3 dargestellte Zustand stellt sich ein. Wird nachfolgend, wie in Fig. 4 dargestellt, Wärme den Endbereichen 14 zugeführt, so schrumpft das Material des zweiten Halters 3 derart, dass sich der zweite Halter 3 fest an der Hydraulikleitung 4 anlegt.

Während in Fig. 4 nur die Endbereiche 14 durch Wärmezufuhr geschrumpft sind, ist es möglich, dass über die ganze Länge des zweiten Halters 3 eine Schrumpfung stattfindet.

### Bezugszeichenliste

- 1: Befestigungsein richtung
- 2: Erster Halter
- 3: Zweiter Halter
- 4: Hydraulikleitung
- 5: Wandung
- 6: Loch
- 7: Zapfen
- 8: Innenseite
- 9: Hintergriffsbereich
- 10: Formschlusselement
- 11: Vorsprung
- 12: Oberfläche
- 13: Durchgang
- 14: Endbereich

## Patentansprüche

1. Befestigungseinrichtung (1) für eine Hydraulikleitung (4) an einem Montageort, mit einem ersten Halter (2) der am Montageort anbringbar ist und m it einem separaten zweiten, zumindest abschnittsweise schlauchförmigen und aus bei Wärmezufuhr schrumpfendem Material aufgebauten zweiten Halter (3), in dem die Hydraulikleitung (4) im montierten Zustand aufgenommen ist, **dadurch gekennzeichnet, dass** der erste Halter (2) im Material des zweiten Halters (3), diesen durchdringend, formschlüssig festgelegt ist.

2. Befestigungseinrichtung (1) nach Anspruch 1, **dadurch gekennzeichnet, dass** der erste Halter (2) durch ein Loch (6) einer Wandung (5) des zweiten Halters (3) ragt.

3. Befestigungseinrichtung (1) nach Anspruch 2, **dadurch gekennzeichnet, dass** der erste Halter (2) die Wandung (5) des zweiten Halters (3) auf der Innenseite (8) hintergreift.

4. Befestigungseinrichtung (1) nach Anspruch 1, **dadurch gekennzeichnet, dass** der erste Halter (2) als Clip ausgebildet ist.

5. Befestigungseinrichtung (1) nach Anspruch 1, **dadurch gekennzeichnet, dass** der erste Halter (2) auf seiner dem Montageort zugewandten Seite nach Art eines Zapfens (7) ausgebildet ist.

6. Befestigungseinrichtung (1) nach Anspruch 5, **dadurch gekennzeichnet, dass** der Zapfen (7) um laufende Vorsprünge (11) als Form schlusselemente (10) aufweist.

7. Befestigungseinrichtung (1) nach Anspruch 1, **dadurch gekennzeichnet, dass** der zweite Halter (3) ein einheitliches Bauteil ist, das sich in seiner Axialerstreckung beidseitig des ersten Halters (2) befindet.

8. Befestigungseinrichtung (1) nach Anspruch 1, **dadurch gekennzeichnet, dass** der zweite Halter (3) im ungeschrumpften Zustand ei nen einheitlichen ersten Innendurchmesser aufweist.

9. Befestigungseinrichtung (1) nach Anspruch 8, **dadurch gekennzeichnet, dass** der zweite Halter (3) im abschnittsweise geschrumpften Zustand einen zweiten Innendurchmesser aufweist, der kleiner als der erste Innendurchmesser ist.

10. Brems- und/oder Kupplungshydraulikleitung mit einer Befestigungseinrichtung (1) nach einem der Ansprüche 1 bis 9.
